(19) Europäisches Patentamt

European Patent Office

Office européen des brevets

(11) Veröffentlichungsnummer: **0 492 276 A1**

(12) **EUROPÄISCHE PATENTANMELDUNG**

(21) Anmeldenummer: **91121220.7**

(22) Anmeldetag: **11.12.91**

(51) Int. Cl.⁵: **B65G 11/20**, B65G 69/16

(30) Priorität: **24.12.90 DE 4041692**

(43) Veröffentlichungstag der Anmeldung:
**01.07.92 Patentblatt 92/27**

(84) Benannte Vertragsstaaten:
**AT BE CH DE FR GB IT LI NL SE**

(71) Anmelder: **Binder, Johann**
**Haselberg 76**
**W-8391 Sonnen(DE)**

(72) Erfinder: **Binder, Johann**
**Haselberg 76**
**W-8391 Sonnen(DE)**

(74) Vertreter: **Graf, Helmut, Dipl.-Ing. et al**
**Patentanwälte Wasmeier & Graf Postfach 10 08 26**
**W-8400 Regensburg 1(DE)**

(54) Vorrichtung zum Abbremsen von Körpern nach einem freien Fall.

㊙ Die Erfindung bezieht sich auf eine neuartige Ausbildung einer Vorrichtung zum Abbremsen eines Körpers nach einem freien Fall.

Die Erfindung bezieht sich auf eine Vorrichtung gemäß Oberbegriff Patentanspruch 1.

In vielen Bereichen der Technik und Wissenschaft sind Untersuchungen an Körpern im freien Fall notwendig.

Aufgabe der Erfindung ist es, eine Vorrichtung aufzuzeigen, mit der ein schonendes Auffangen bzw. Abbremsen von Körpern nach einem freien Fall möglich ist.

Zur Lösung dieser Aufgabe ist eine Vorrichtung entsprechend dem kennzeichnenden Teil des Patentanspruches 1 ausgebildet.

Die erfindungsgemäße Vorrichtung ermöglicht ein schonendes Fangen sowie Abbremsen von Körpern am Ende eines freien Falls, d. h. eine schonende Vernichtung der kinetischen Energie solcher Körper und eignet sich insbesondere für die Verwendung bei physikalischen Untersuchungen, aber auch in anderen Bereichen der Wissenschaft und Technik, wo Körper einem freien Fall unterzogen werden.

Weiterbildungen der Erfindung sind Gegenstand der Unteransprüche.

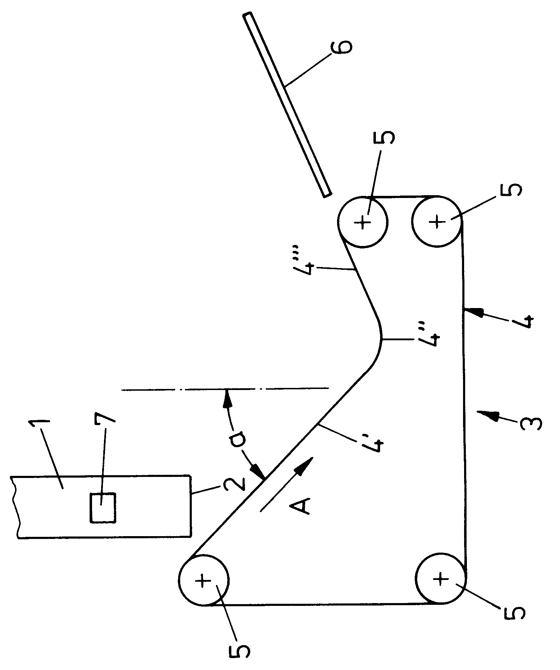

Die Erfindung wird im folgenden anhand der Figur, die in sehr vereinfachter, schematischer Darstellung einer Ausführungsform der erfindungsgemäßen Abbremsvorrichtung zeigt, näher erläutert.

In der Figur ist 1 ein sich mit seiner Achse in vertikaler Richtung erstreckender Schacht eines Fallturmes. Das untere, offene Ende 2 des Schachtes 1 ist über einer Transporteinrichtung 3 angeordnet, und zwar speziell über einem schräg nach unten verlaufenden Abschnitt 4' eines Transportbandes 4 der Transporteinrichtung 3. Das Transportband 4 ist endlos, in sich geschlossen ausgebildet und über mehrere Rollen 5 sowie zusätzliche Führungen geführt und mit wenigstens einer der Rollen 5 in Richtung des Pfeiles A endlos umlaufend angetrieben. Das Transportband 4, welches beispielsweise aus einem üblicherweise für Transportbänder verwendeten Gummi- oder Kunststoffmaterial mit Gewebeeinlage hergestellt ist, besitzt in Richtung senkrecht zur Zeichenebene der Figur eine Breite, die mindestens gleich der horizontalen Querschnittsabmessung des fallenden Körpers 7 in dieser senkrecht zur Zeichenebene verlaufenden Achsrichtung ist.

Der Abschnitt 4' des Transportbandes 4 weist zumindest in dem unmittelbar unterhalb der Öffnung 2 liegenden Bereich eine Neigung gegenüber der Vertikalen auf, die einem Winkel a entspricht, der gleich oder kleiner als 45° ist und sich in vertikaler Richtung nach oben öffnet.

In Umlaufrichtung A schließt sich an den Abschnitt 4' über einen bogenförmigen Umlenkbereich 4'' ein schräg nach oben führender Abschnitt 4''' an. Im Umlenkbereich 4'' ist das Transportband 4 beidseitig unter Freihaltung des mittleren Bereiches dieses Transportbandes durch nicht näher dargestellte Führungen geführt. Am Ende des Abschnittes 4''' ist das Transportband 4 über eine Rolle 5 nach unten umgelenkt und über drei weitere Rollen 5, von denen sich eine am Anfang des Abschnittes 4' befindet, an diesen Abschnitt zurückgeführt.

Bezogen auf die Transportrichtung des Transportbandes 4 schließt sich an den Abschnitt 4''' eine Bremsstrecke 6 derart an, daß die von der Oberseite des Transportbandes 4 im Abschnitt 4''' gebildete Transportfläche im wesentlichen niveaugleich in eine Fläche der Bremsstrecke 6 übergeht. Die Bremsstrecke 6 ist beispielsweise von einer Rollenbahn, deren Rollen z. B. teilweise gebremst sind, oder aber von einer Rutsche gebildet.

Im Betrieb wird das Transportband 4 in Richtung des Pfeiles A mit einer Geschwindigkeit angetrieben, die in etwa gleich der Geschwindigkeit ist, die ein im Schacht 1 frei nach unten fallender Körper 7 an der Öffnung 2 des Schachtes 1 aufweist. Dieser Körper 7 fällt dann auf den Abschnitt 4' des Transportbandes 4 und wird von dem Transportband im wesentlichen ohne Abbremsung seiner Geschwindigkeit zunächst mitgeführt und gelangt dann über den Abschnitt 4''' auf die Bremsstrecke 6, in der ein sanftes Abbremsen der Geschwindigkeit des Körpers 7 bzw. eine sanfte Vernichtung der kinetischen Energie des Körpers 7 erfolgt.

Mit der beschriebenen Vorrichtung ist es somit möglich, auch empfindliche Körper 7 mehrfach einem freien Fall im Schacht 1 zu unterziehen.

**Patentansprüche**

1. Vorrichtung zum Abbremsen eines Körpers (7) nach einem freien Falls, gekennzeichnet durch eine Transportstrecke, die zumindest in einem für das Auftreffen des Körpers (7) bestimmten Bereich von einem ersten Abschnitt (4') eines über Umlenkelemente (5) und/oder Führungen geführten und in einer Transportrichtung (A) endlos umlaufend angetriebenen Transportbandes (4) gebildet ist, wobei das Transportband (4) in dem ersten Abschnittes (4) in Transportrichtung schräg nach unten verläuft und an den ersten Abschnitt (4') anschließend einen Übergangsbereich (4'') besitzt, auf den eine Bremsstrecke (6) der Transportstrecke folgt.

2. Vorrichtung nach Anspruch 1, dadurch gekennzeichnet, daß das Transportband (4) mit einer Geschwindigkeit umlaufend angetrieben ist, die in etwa der Geschwindigkeit entspricht, mit welcher der Körper (7) beim freien Fall auf das Transportband (4) auftrifft.

3. Vorrichtung nach Anspruch 1 oder 2, dadurch gekennzeichnet, daß die Transportrichtung (A) des Transportbandes (4) im ersten Abschnitt (4') mit einer vertikalen Achse einen Winkel (a) von etwa 45º, bevorzugt einen Winkel (a) kleiner als 45º einschließt, der sich in vertikaler Richtung nach oben öffnet.

4. Vorrichtung nach einem der Ansprüche 1 bis 3, dadurch gekennzeichnet, daß sich an den Umlenkbereich (4'') ein zweiter Abschnitt (4''') des Transportbandes (4) anschließt, in welchem die Transportrichtung (A) des Transportbandes (4) schräg nach oben gerichtet ist, und daß auf diesem zweiten Abschnitt (4''') die Bremsstrecke (6) folgt.

5. Vorrichtung nach einem der Ansprüche 1 bis 4, dadurch gekennzeichnet, daß die Bremsstrecke von einer Rollenbahn oder Rutsche gebildet ist.

Europäisches Patentamt

**EUROPÄISCHER RECHERCHENBERICHT**

Nummer der Anmeldung

EP 91 12 1220

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | DE-B-1 049 780 (DEUTSCHE BUNDESPOST)<br>* das ganze Dokument *<br>--- | 1 | B65G11/20<br>B65G69/16 |
| A | FR-A-2 316 153 (AKTIEBOLAGET PLATMANUFAKTUR)<br>* das ganze Dokument *<br>--- | 1 | |
| A | DE-C-870 079 (KLÖCKNER-HUMBOLDT-DEUTZ)<br>* das ganze Dokument *<br>--- | 1 | |
| A | GB-A-2 156 789 (SIMPLEX MECHANICAL HANDLING)<br>* das ganze Dokument *<br>--- | 1 | |
| A | FR-A-1 456 034 (AZEMA)<br>* das ganze Dokument *<br><br>----- | 1 | |
| | | | **RECHERCHIERTE SACHGEBIETE (Int. Cl.5 )**<br><br>B65G |

Der vorliegende Recherchenbericht wurde für alle Patentansprüche erstellt

| Recherchenort | Abschlußdatum der Recherche | Prüfer |
|---|---|---|
| DEN HAAG | 17 MAERZ 1992 | OSTYN T.J.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
.........................................................................................................
& : Mitglied der gleichen Patentfamilie, übereinstimmendes Dokument

EPO FORM 1503 03.82 (P0403)